# EUROPEAN PATENT APPLICATION

(11) **EP 4 411 271 A1**
(43) Date of publication of application: **07.08.2024**
(21) Application number: 22875589.8
(22) Date of filing: 02.08.2022
(51) Int. Cl.: F24F 13/28, F24F 1/02, F24F 7/08

(54) **VENTILATION DEVICE AND AIR-CONDITIONING SYSTEM**

(30) Priority: 30.09.2021 JP 2021160958; 08.02.2022 JP 2022018231
(71) Applicant: Daikin Industries, Ltd., Osaka-shi, Osaka 530-0001 (JP)
(72) Inventor: SAEKI, Kumiko, Osaka-shi, Osaka 530-8323 (JP); IYOSHI, Yuta, Osaka-shi, Osaka 530-8323 (JP); YAMANOI, Yoshiki, Osaka-shi, Osaka 530-8323 (JP); TAKAHASHI, Takashi, Osaka-shi, Osaka 530-8323 (JP); ODO, Tsunahiro, Osaka-shi, Osaka 530-8323 (JP); TSURUZONO, Shota, Osaka-shi, Osaka 530-8323 (JP)
(74) Representative: Hoffmann Eitle
(86) International application number: PCT/JP2022/029601
(87) International publication number: WO 2023/053712

(57) **Abstract**

A ventilator 10 includes a refrigerant circuit 50 through which a refrigerant flows, the refrigerant circuit 50 including a compressor 42, a first heat exchanger 23, and a second heat exchanger 33 that are connected by a refrigerant pipe 51, an air supply fan 22 that supplies air in an outdoor space S2 to an indoor space through the first heat exchanger 23, a first casing 21 that accommodates the first heat exchanger 23 and the air supply fan 22, an exhaust fan 32 that exhausts air in the indoor space S1 to the outdoor space S2 through the second heat exchanger 33, and a second casing 31 that accommodates the second heat exchanger 33 and the exhaust fan 32, in which the first casing 21 and the second casing 31 are separable.

## Description

### TECHNICAL FIELD

The present disclosure relates to a ventilator and an air conditioning system.

### BACKGROUND ART

Conventionally, there has been known a ventilator that includes a heat exchanger, an air supply path and an air exhaust path that allow an inside and an outside of a target space to communicate with each other via the heat exchanger, an air supply fan that supplies air outside the target space into the target space via the air supply path, and an exhaust fan that exhausts air in the target space to the outside of the target space via the air exhaust path (see Patent Literature 1). The ventilator described in Patent Literature 1 uses a total heat exchanger as a heat exchanger, and performs heat exchange (heat recovery) by the total heat exchanger between the air flowing through the air supply path and the air flowing through the air exhaust path.

### CITATION LIST

### [PATENT LITERATURE]

PATENT LITERATURE 1: Japanese Laid-Open Patent Publication No. 2020-186822

### SUMMARY OF THE INVENTION

### [TECHNICAL PROBLEM]

In the ventilator, since the heat recovery is performed by using a total heat exchanger, it is necessary to collectively arrange the air supply path, the air exhaust path, and the total heat exchanger in one place, and the air supply fan, the exhaust fan, and the total heat exchanger are accommodated in one casing. Therefore, it is necessary to secure a space in which the casing accommodating the air supply fan, the exhaust fan, and the total heat exchanger can be disposed, and a degree of freedom in arrangement of the ventilator is not high.

An object of the present disclosure is to increase a degree of freedom in arrangement of a ventilator capable of recovering heat between supply air and exhaust air.

### [SOLUTION TO PROBLEM]

(1) A ventilator of the present disclosure includes a refrigerant circuit through which a refrigerant flows, the refrigerant circuit including a compressor, a first heat exchanger, and a second heat exchanger that are connected by a refrigerant pipe, an air supply fan that supplies air in an outdoor space to an indoor space through the first heat exchanger, a first casing that accommodates the first heat exchanger and the air supply fan, an exhaust fan that exhausts air in the indoor space to the outdoor space through the second heat exchanger, and a second casing that accommodates the second heat exchanger and the exhaust fan, in which the first casing and the second casing are separable.
   In the ventilator of the present disclosure, by performing heat recovery between supply air and exhaust air using the refrigerant as a medium, a set of the first heat exchanger and the air supply fan, a set of the second heat exchanger and the exhaust fan, and the compressor can be disposed at separate positions. As a result, it is possible to increase a degree of freedom in arrangement of the ventilator capable of recovering heat as compared with the related art.
(2) The ventilator of the present disclosure preferably further includes a third casing that accommodates the compressor.
   In this case, by unitizing the set of the first heat exchanger and the air supply fan, the set of the second heat exchanger and the exhaust fan, and the compressor, the degree of freedom in arrangement of the ventilator capable of recovering heat can be further increased.
(3) In the ventilator of the present disclosure, the third casing is preferably separable from the first casing and the second casing.
   In this case, by configuring each of the air supply unit, the exhaust unit, and the compressor unit to be separable, the degree of freedom in arrangement of the ventilator capable of recovering heat can be further increased.
(4) In the ventilator of the present disclosure, the first heat exchanger, the air supply fan, and the first casing preferably constitute an air supply unit, the second heat exchanger, the exhaust fan, and the second casing preferably constitute an exhaust unit, and a plurality of the air supply units or a plurality of the exhaust units is preferably connected to the compressor.
   In this case, the air supply unit and the exhaust unit can be disposed for each room, or the air supply unit can be disposed for each of a plurality of rooms and fewer exhaust units than the air supply units can be disposed. Therefore, the degree of freedom in arrangement of the air supply unit and the exhaust unit can be further increased.
(5) In the ventilator of the present disclosure, when the plurality of air supply units is connected to the compressor, the air supply units preferably include a control valve for adjusting a pressure of the refrigerant to be supplied to the first heat exchanger.
   When the plurality of air supply units is provided, it is possible to individually adjust a temperature of the air supplied from the air supply units to the indoor space.
(6) In the ventilator of the present disclosure, the compressor is preferably accommodated in one of the first casing or the second casing.
   In this case, by unitizing the set of the first heat exchanger and the air supply fan and the set of the second heat exchanger and the exhaust fan, and accommodating the compressor in any one of the units, the degree of freedom in arrangement of the ventilator capable of recovering heat can be further increased.
(7) The ventilator of the present disclosure preferably further includes a filter that allows collection of dust and a chemical substance contained in cigarette smoke and allows passage of the air exhausted from the indoor space to the outdoor space through the second heat exchanger.
   Such a ventilator can perform ventilation and temperature control in a building independently without an air conditioner. Therefore, the ventilator of the present disclosure facilitates installation of a smoking corner subjected to ventilation and temperature control in a building.
(8) An air conditioning system of the present disclosure includes the ventilator, and an air conditioner that air-conditions the indoor space, in which the air conditioner includes an air conditioning refrigerant circuit separate from the refrigerant circuit.

In the air conditioning system of the present disclosure, when the ventilator and the air conditioner are provided together, the degree of freedom in arrangement of the ventilator can be increased by separating the refrigerant circuit.

### BRIEF DESCRIPTION OF DRAWINGS

FIG. 1 is a schematic configuration diagram of a ventilator of the present disclosure.
FIG. 2 is a schematic perspective view of a ventilator according to a first embodiment of the present disclosure.
FIG. 3 is a schematic configuration diagram of the ventilator according to the first embodiment of the present disclosure.
FIG. 4 is a control block diagram of the ventilator of the present disclosure.
FIG. 5 is a schematic view showing a schematic arrangement of the ventilator according to the first embodiment of the present disclosure.
FIG. 6A is a schematic view showing a first modification of the ventilator according to the first embodiment of the present disclosure.
FIG. 6B is a schematic view showing a second modification of the ventilator according to the first embodiment of the present disclosure.
FIG. 7A is a schematic view showing a third modification of the ventilator according to the first embodiment of the present disclosure.
FIG. 7B is a schematic view showing a fourth modification of the ventilator according to the first embodiment of the present disclosure.
FIG. 7C is a schematic view showing a fifth modification of the ventilator according to the first embodiment of the present disclosure.
FIG. 8 is a schematic view showing a schematic arrangement of a ventilator according to a second embodiment of the present disclosure.
FIG. 9 is a schematic configuration diagram of the ventilator according to the second embodiment of the present disclosure.
FIG. 10 is a schematic view showing a schematic arrangement of a ventilator according to a third embodiment of the present disclosure.
FIG. 11 is a schematic configuration diagram of the ventilator according to the third embodiment of the present disclosure.
FIG. 12 is a schematic configuration diagram of an air conditioning system of the present disclosure.
FIG. 13 is a schematic configuration diagram of a ventilator according to a fourth embodiment of the present disclosure.

### DETAILED DESCRIPTION

### (Outline of ventilator)

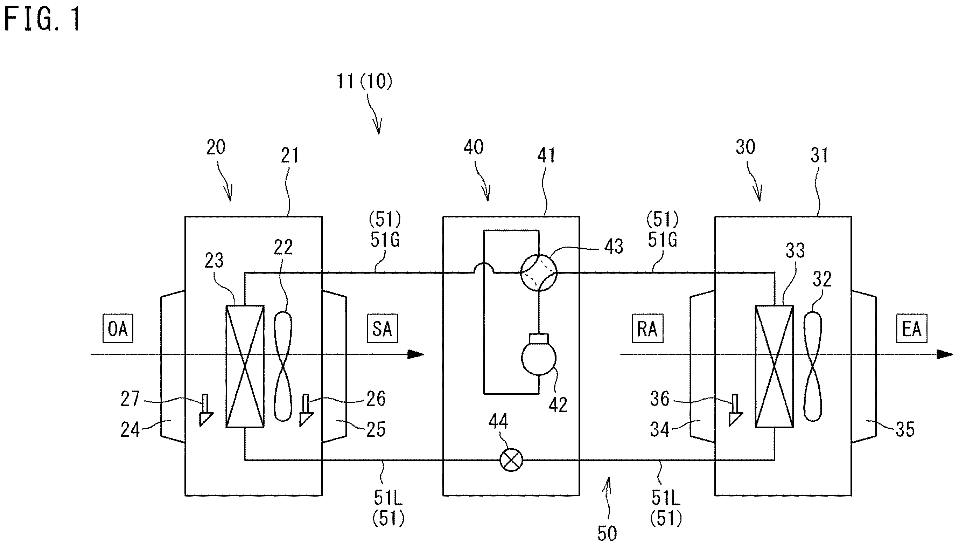

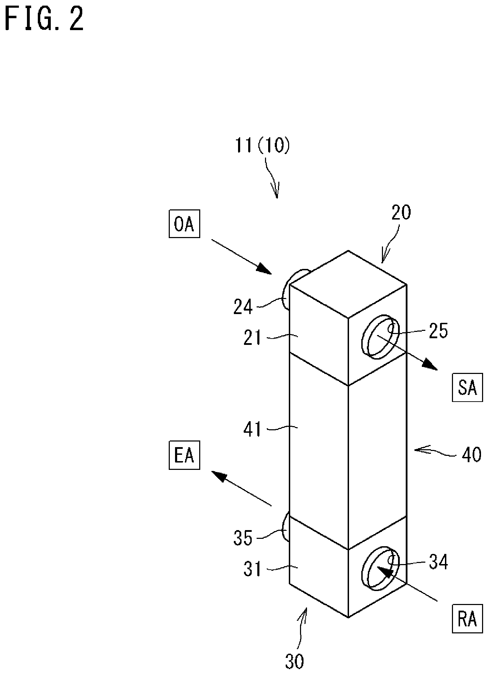

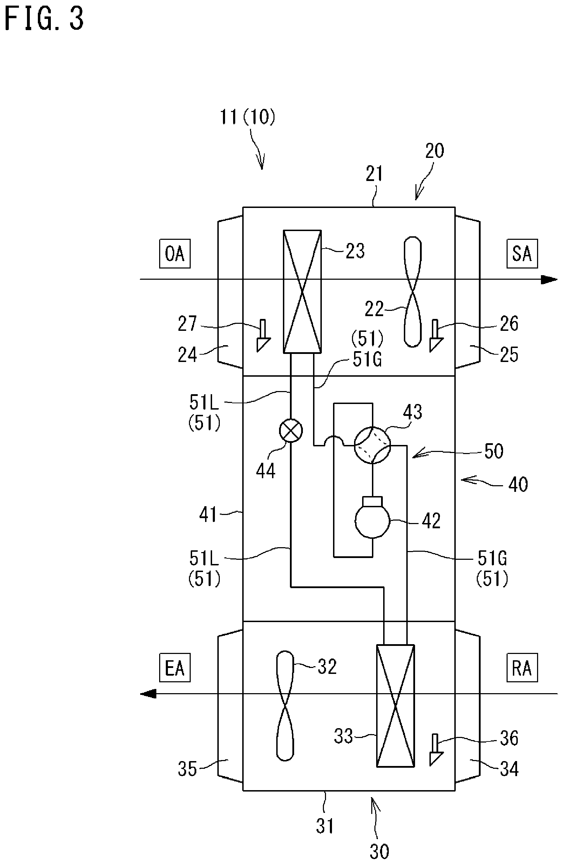

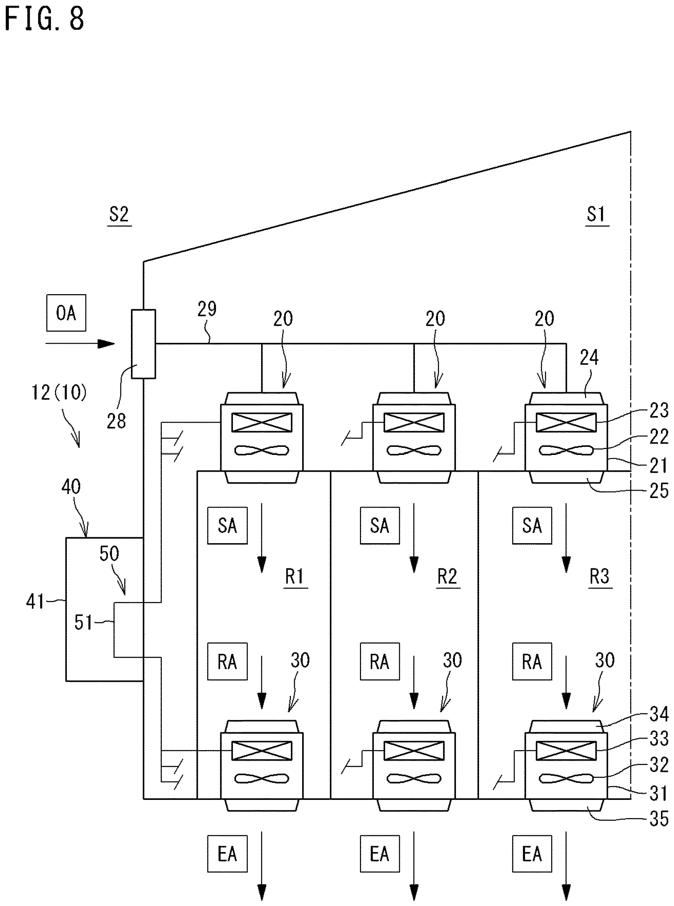

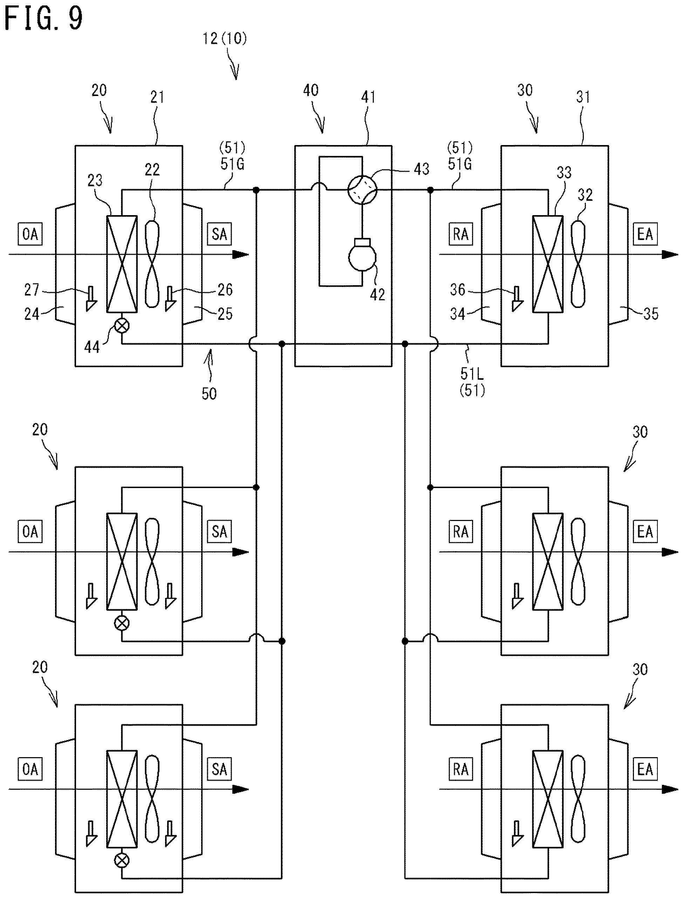

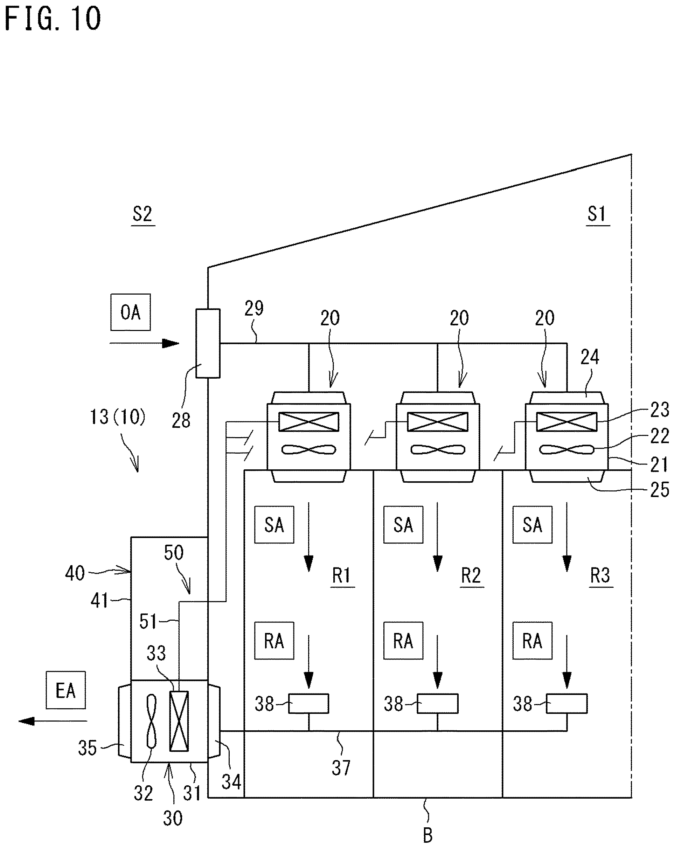

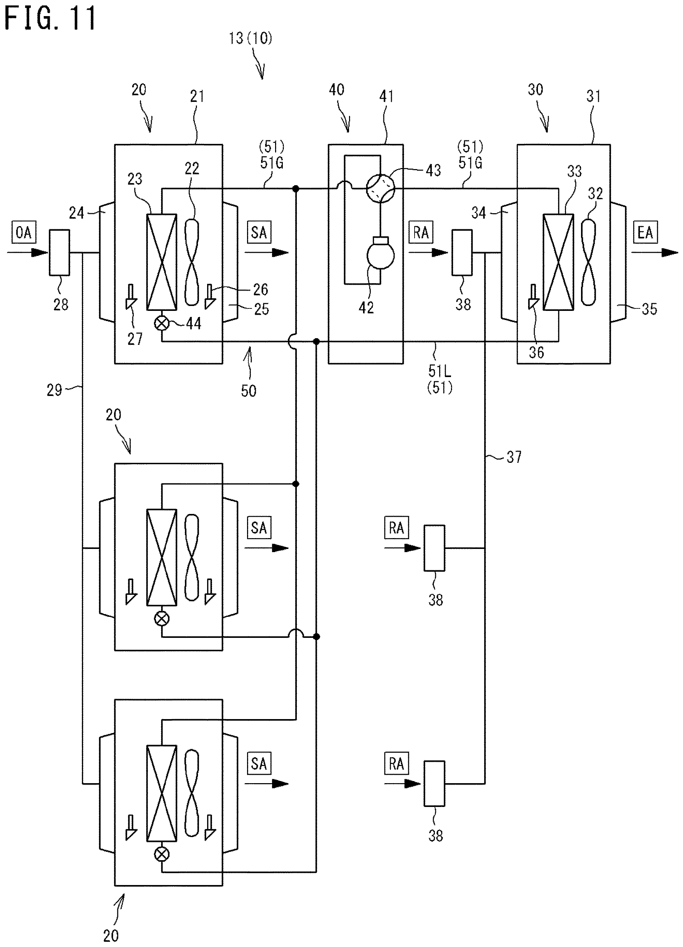

FIG. 1 is a schematic configuration diagram of a ventilator of the present disclosure. FIG. 2 is a schematic perspective view of a ventilator according to a first embodiment of the present disclosure. FIG. 3 is a schematic configuration diagram of the ventilator according to the first embodiment of the present disclosure. In the following description, a ventilator 10 (see FIG. 2, FIG. 3, and FIG. 5) according to a first embodiment will be referred to as a first ventilator 11, a ventilator 10 (see FIG. 8 and FIG. 9) according to a second embodiment will be referred to as a second ventilator 12, and a ventilator 10 (see FIG. 10, and FIG. 11) according to a third embodiment will be referred to as a third ventilator 13. In the following description, a configuration common to the first to third ventilators 11 to 13 will be described when the ventilators are simply referred to as "ventilator 10".

The ventilator 10 shown in FIG. 1 is an embodiment of the ventilator of the present disclosure, and is installed in a building such as an office building or a factory to implement ventilation of a target space in the building. The ventilator 10 includes an air supply unit 20, an exhaust unit 30, a compressor unit 40, and a refrigerant circuit 50.

As shown in FIG. 1 to FIG. 3, the air supply unit 20 includes a first casing 21, an air supply fan 22, and a first heat exchanger 23. The first casing 21 according to the present embodiment is a cubic box constituted with a panel member having a heat insulating property, and has side surfaces provided with a suction port 24 and a blow-out port 25. The air supply fan 22 and the first heat exchanger 23 are disposed in the first casing 21. When the air supply fan 22 is driven, the air supply unit 20 can take air (outside air OA) in an outdoor space S2 into the first casing 21, exchange the taken air with a refrigerant in the first heat exchanger 23, and then release the air as a supply air SA from the blow-out port 25 toward an indoor space S1.

The first heat exchanger 23 constitutes the refrigerant circuit 50 described later. The first heat exchanger 23 is a cross-fin tube type or microchannel type heat exchanger, and is used to exchange heat between the refrigerant flowing in the first heat exchanger 23 and the air (outside air OA) in the outdoor space S2.

The air supply unit 20 further includes a supply air temperature sensor 26 and an outside air temperature sensor 27. The supply air temperature sensor 26 is disposed in an airflow after passing through the first heat exchanger 23 in the first casing 21, and can detect a temperature of the supply air SA. The outside air temperature sensor 27 is disposed in an airflow before passing through the first heat exchanger 23 in the first casing 21, and can detect a temperature of the outside air OA.

The exhaust unit 30 includes a second casing 31, an exhaust fan 32, and a second heat exchanger 33. The second casing 31 according to the present embodiment is a cubic box constituted with a panel member having a heat insulating property, and has side surfaces provided with a suction port 34 and a blow-out port 35. The exhaust fan 32 and the second heat exchanger 33 are disposed in the second casing 31. When the exhaust fan 32 is driven, the exhaust unit 30 can take air (return air RA) in the indoor space S1 into the second casing 31, exchange the taken air with a refrigerant in the second heat exchanger 33, and then release the air as an exhaust air EA from the blow-out port 35 toward the outdoor space S2.

The second heat exchanger 33 constitutes the refrigerant circuit 50 described later. The second heat exchanger 33 is a cross-fin tube type or microchannel type heat exchanger, and is used to exchange heat between the refrigerant flowing in the second heat exchanger 33 and the air (return air RA) in the indoor space S1.

The exhaust unit 30 further includes a return air temperature sensor 36. The return air temperature sensor 36 is disposed in an airflow before passing through the second heat exchanger 33 in the second casing 31, and can detect a temperature of the return air RA.

The compressor unit 40 includes a third casing 41, a compressor 42, a four-way switching valve 43, and an expansion valve 44. Although the compressor unit 40 according to the present embodiment includes the third casing 41, the third casing 41 may be omitted. In this case, the compressor 42 and the four-way switching valve 43 are preferably accommodated in the first casing 21 of the air supply unit 20 or the second casing 31 of the exhaust unit 30. Although the expansion valve 44 is accommodated in the compressor unit 40 in the ventilator 10 according to the present embodiment, the expansion valve 44 may be accommodated in the first casing 21 of the air supply unit 20 or the second casing 31 of the exhaust unit 30.

The compressor 42 sucks a low-pressure gaseous refrigerant and discharges a high-pressure gaseous refrigerant. The compressor 42 includes a motor having the number of operating revolutions adjustable in accordance with inverter control. The compressor 42 is of a variable capacity type (performance variable type) having capacity (performance) variable in accordance with inverter control of the motor. Alternatively, the compressor 42 may be of a constant capacity type. The compressor 42 used in the ventilator 10 of the present disclosure may be configured by connecting two or more compressors in parallel.

The four-way switching valve 43 reverses a refrigerant flow in a refrigerant pipe, and switchingly supplies one of the first heat exchanger 23 or the second heat exchanger 33 with the refrigerant discharged from the compressor 42. Accordingly, the ventilator 10 can switch between a cooling operation for cooling the outside air OA and a heating operation for heating the outside air OA. The expansion valve 44 is constituted by an electric valve capable of adjusting a flow rate and a pressure of a refrigerant. In the ventilator 10, an opening degree of the expansion valve 44 is controlled to adjust the pressure of the refrigerant to be supplied to the first heat exchanger 23.

The refrigerant circuit 50 includes the compressor 42, the four-way switching valve 43, the expansion valve 44, the first heat exchanger 23, the second heat exchanger 33, and a refrigerant pipe 51 (a liquid pipe 51L and a gas pipe 51G) connecting the above components. The refrigerant circuit 50 circulates the refrigerant between the first heat exchanger 23 and the second heat exchanger 33.

In the ventilator 10 having the above configuration, when the outside air OA is cooled and supplied by the air supply unit 20, the four-way switching valve 43 is held in a state indicated by a solid line in FIG. 1. The high-temperature and high-pressure gaseous refrigerant discharged from the compressor 42 flows into the second heat exchanger 33 of the exhaust unit 30 through the four-way switching valve 43. At this time, the second heat exchanger 33 functions as a condenser, and causes heat exchange with the return air RA by an activation of the exhaust fan 32 to condense and liquefy the refrigerant. The liquefied refrigerant is decompressed by the expansion valve 44 and flows into the first heat exchanger 23. At this time, the first heat exchanger 23 functions as an evaporator, and in the first heat exchanger 23, the refrigerant exchanges heat with the outside air OA and evaporates. The outside air OA cooled by the evaporation of the refrigerant is supplied to the indoor space S1 as the supply air SA by the air supply fan 22. The refrigerant evaporated in the first heat exchanger 23 returns to the compressor unit 40 through the refrigerant pipe 51 (gas pipe 51G), and is sucked into the compressor 42 through the four-way switching valve 43.

In the ventilator 10 having the above configuration, when the outside air OA is heated and supplied by the air supply unit 20, the four-way switching valve 43 is held in a state indicated by a broken line in FIG. 1. The high-temperature and high-pressure gaseous refrigerant discharged from the compressor 42 passes through the four-way switching valve 43 and flows into the first heat exchanger 23 of the air supply unit 20. At this time, the first heat exchanger 23 functions as a condenser, and the refrigerant exchanges heat with the outside air OA and to be condensed and liquefied in the first heat exchanger 23. The outside air OA heated by the condensation of the refrigerant is supplied to the indoor space S 1 by the air supply fan 22. The refrigerant liquefied in the first heat exchanger 23 reaches the compressor unit 40 through the refrigerant pipe 51 (liquid pipe 51L), is decompressed to a predetermined low pressure by the expansion valve 44, and further flows into the second heat exchanger 33. At this time, the second heat exchanger 33 functions as an evaporator, and the refrigerant exchanges heat with the return air RA and evaporates in the second heat exchanger 33. The refrigerant evaporated and vaporized in the second heat exchanger 33 is sucked into the compressor 42 through the four-way switching valve 43.

In the ventilator 10 according to the present embodiment, the refrigerant circuit 50 includes the four-way switching valve 43, and the first heat exchanger 23 can be switched and used as an evaporator and a condenser by the four-way switching valve 43. However, the four-way switching valve 43 in the ventilator 10 may be omitted. In this case, the first heat exchanger 23 can be used as an evaporator or a condenser.

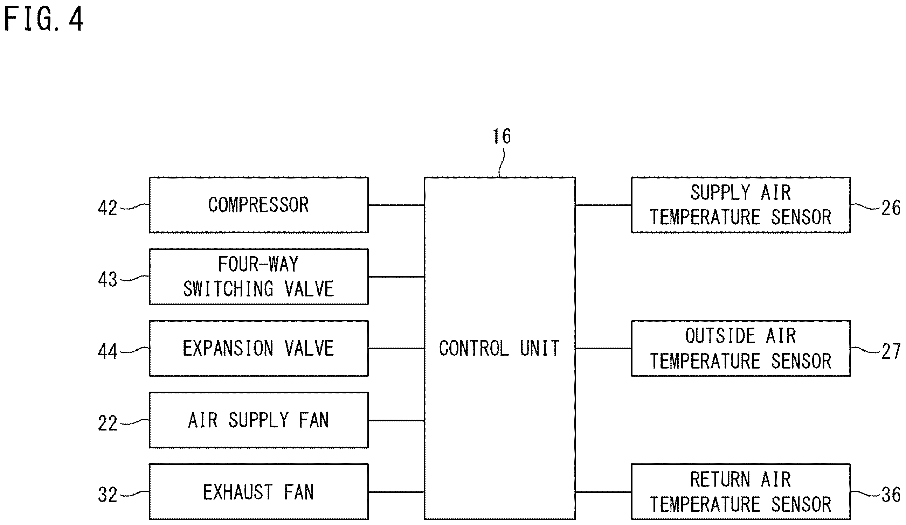

FIG. 4 is a control block diagram of the ventilator. The ventilator 10 includes a control unit 16 shown in FIG. 4. The control unit 16 is configured to control operation of the ventilator 10, and is constituted by, for example, a microcomputer including a processor such as a CPU and a memory such as a RAM or a ROM. The control unit 16 may alternatively be embodied as hardware with use of an LSI, an ASIC, an FPGA, or the like. The control unit 16 exerts a predetermined function when the processor executes a program installed in the memory.

The control unit 16 is connected to the air supply fan 22, the exhaust fan 32, the compressor 42, the four-way switching valve 43, and the expansion valve 44. The supply air temperature sensor 26, the outside air temperature sensor 27, and the return air temperature sensor 36 are connected to the control unit 16. The control unit 16 controls operations of the air supply fan 22, the exhaust fan 32, the compressor 42, the four-way switching valve 43, the expansion valve 44, and the like on the basis of detection values of the temperature sensors. Furthermore, a remote controller (not shown) for a user to activate or stop the ventilator 10, change settings, and the like may be connected to the control unit 16.

### (First ventilator)

As shown in FIG. 1 to FIG. 3 and FIG. 5, the first ventilator 11 includes one air supply unit 20 and one exhaust unit 30. The air supply unit 20 and the exhaust unit 30 have independent casings (the first casing 21 and the second casing 31), and are configured as independent units. In the mode shown in FIG. 2, in the first ventilator 11, the air supply unit 20 and the exhaust unit 30 are integrally configured, but the air supply unit 20 and the exhaust unit 30 are separable. In the first ventilator 11, a set of the first heat exchanger 23 and the air supply fan 22 and a set of the second heat exchanger 33 and the exhaust fan 32 can be disposed at separate positions.

The first ventilator 11 further includes the compressor unit 40. The compressor unit 40 has the independent third casing 41 and is configured as an independent unit. In the mode shown in FIG. 2, in the first ventilator 11, the air supply unit 20, the exhaust unit 30, and the compressor unit 40 are integrally configured, but the compressor unit 40 is separable from the air supply unit 20 and the exhaust unit 30. In the first ventilator 11, a set of the first heat exchanger 23 and the air supply fan 22, a set of the second heat exchanger 33 and the exhaust fan 32, and the compressor unit 40 (compressor 42) can be disposed at separate positions.

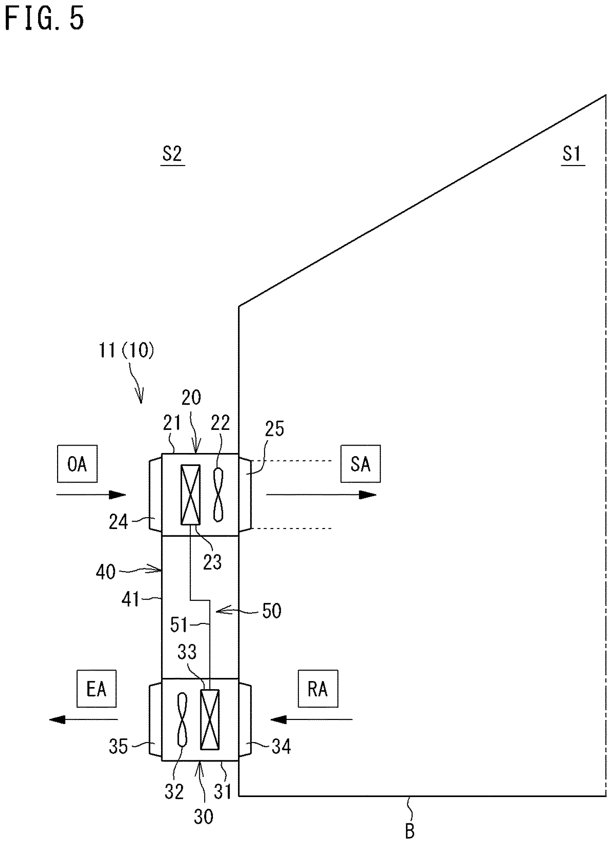

As shown in FIG. 5, the first ventilator 11 can be disposed in the outdoor space S2, for example. In the present embodiment, the blow-out port 25 of the air supply unit 20 and the suction port 34 of the exhaust unit 30 are disposed directly on an outer wall surface of a building B. In the first ventilator 11, a duct may be connected to the blow-out port 25 and the suction port 34 to be able to adjust a position where the supply air SA is released to the indoor space S1 and a position where the return air RA is sucked from the indoor space S1. In the present embodiment, a case where the first ventilator 11 is disposed in the outdoor space S2 is exemplified. However, the entire first ventilator 11 may be disposed in the indoor space S1, or the air supply unit 20, the exhaust unit 30, and the compressor unit 40 may be separated, some of the units may be disposed in the outdoor space S2, and the other units may be disposed in the indoor space S1.

### (Modification of first ventilator 11)

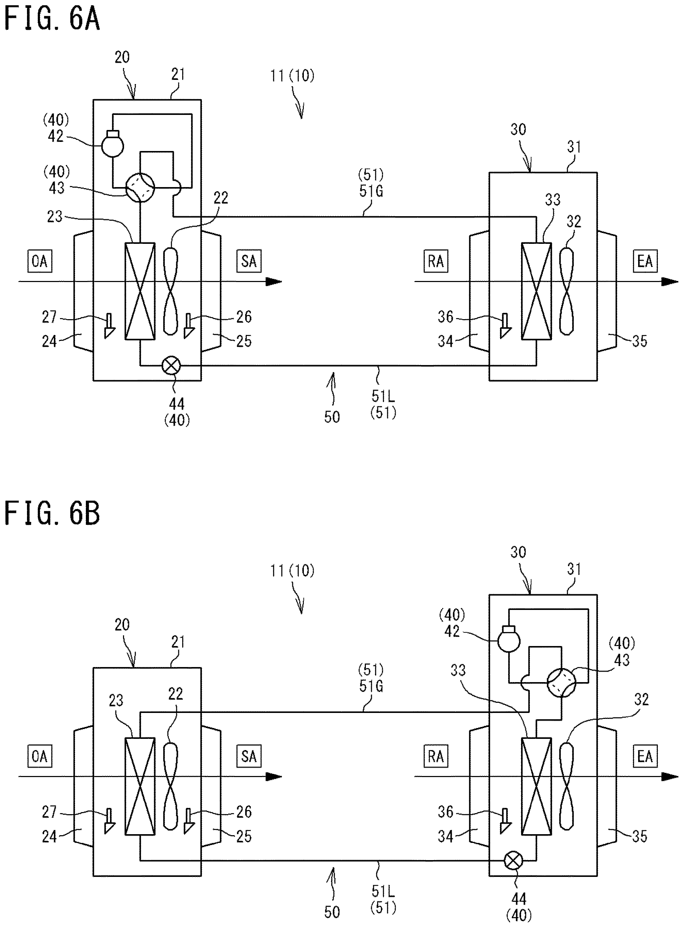

FIG. 6A is a schematic view showing a first modification of the ventilator according to the first embodiment of the present disclosure. FIG. 6B is a schematic view showing a second modification of the ventilator according to the first embodiment of the present disclosure. In the first ventilator 11 shown in FIG. 1, FIG. 3, and FIG. 5, the compressor 42 is accommodated in the third casing 41 of the compressor unit 40, but the compressor 42 in the first ventilator 11 may be accommodated in the air supply unit 20 or the exhaust unit 30. For example, as shown in FIG. 6A, in first ventilator 11, compressor 42 may be disposed in the first casing 21. In this case, the four-way switching valve 43 is preferably disposed in the first casing together with the compressor 42. As shown in FIG. 6B, in first ventilator 11, compressor 42 may be disposed in the second casing 31. In this case, the four-way switching valve 43 is preferably disposed in the second casing together with the compressor 42.

In the first ventilator 11, the third casing 41 can be omitted by accommodating the compressor 42 in the first casing 21 or the second casing 31. In the first ventilator 11 in this case, the number of units constituting the first ventilator 11 can be reduced to two, which is the air supply unit 20 and the exhaust unit 30. Accordingly, the degree of freedom in arrangement of the first ventilator 11 can be further increased.

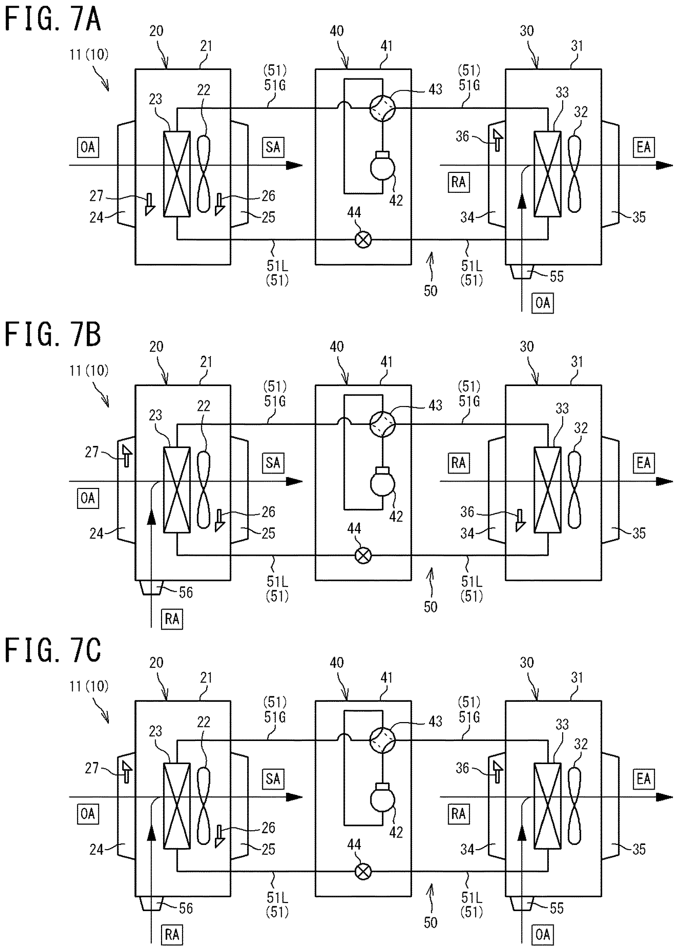

FIG. 7A is a schematic view showing a third modification of the ventilator according to the first embodiment of the present disclosure. FIG. 7B is a schematic view showing a fourth modification of the ventilator according to the first embodiment of the present disclosure. FIG. 7C is a schematic view showing a fifth modification of the ventilator according to the first embodiment of the present disclosure. As shown in FIG. 7A, in the first ventilator 11, the exhaust unit 30 may be provided with an outside air inlet 55. In the first ventilator 11 shown in FIG. 7A, the return air RA sucked through the suction port 34 and the outside air OA sucked through the outside air inlet 55 can be taken into the second casing 31. In the first ventilator 11 having such a configuration, the air obtained by mixing the return air RA and the outside air OA can be passed through the second heat exchanger 33 and released as the exhaust air EA. In this case, air volume of the exhaust air EA is increased by the outside air OA as compared with the exhaust air EA of the first ventilator 11 shown in FIG. 1. In the first ventilator 11 shown in FIG. 7A, a heat transfer performance of the second heat exchanger 33 can be improved by increasing the air volume of the exhaust air EA, and cooling and heating performance of first ventilator 11 can be improved.

As shown in FIG. 7B, in the first ventilator 11, the air supply unit 20 may be provided with a return air inlet 56. In the first ventilator 11 shown in FIG. 7B, the outside air OA sucked through the suction port 24 and the return air RA sucked through the return air inlet 56 can be taken into the first casing 21. In the first ventilator 11 having such a configuration, the air obtained by mixing the outside air OA and the return air RA can be passed through the first heat exchanger 23 and supplied as the supply air SA. In the first ventilator 11 illustrated in FIG. 7B, a supply air temperature can be adjusted by changing a flow rate mixing ratio of the outside air OA and the return air RA.

As shown in FIG. 7C, in the first ventilator 11, the exhaust unit 30 may be provided with the outside air inlet 55, and the air supply unit 20 may be provided with the return air inlet 56. In the first ventilator 11 shown in FIG. 7C, the air volume of the exhaust air EA is increased to improve the cooling and heating capability, and the supply air temperature can be adjusted by changing the flow rate mixing ratio of the outside air OA and the return air RA.

### (Second ventilator)

FIG. 8 is a schematic view showing a schematic arrangement of a ventilator according to a second embodiment of the present disclosure. FIG. 9 is a schematic configuration diagram of the ventilator according to the second embodiment of the present disclosure. The ventilator 10 of the present disclosure may include a plurality of air supply units 20 and a plurality of exhaust units 30. The second ventilator 12 shown in FIG. 8 and FIG. 9 includes the plurality of air supply units 20 and the plurality of exhaust units 30, and is different from the first ventilator 11 (see FIG. 1) in this regard.

As shown in FIG. 8, the second ventilator 12 is installed in the building B including three rooms R1 to R3 in the indoor space S1. In the second ventilator 12, one air supply unit 20 and one exhaust unit 30 are disposed as a pair in each of the rooms R1 to R3, and a total of three air supply units 20 and a total of three exhaust units 30 are provided. In the second ventilator 12, the plurality of air supply units 20 and the plurality of exhaust units 30 are connected to the compressor 42. Although the second ventilator 12 according to the present embodiment includes three air supply units 20 and three exhaust units 30, the number of the air supply units 20 and the number of the exhaust units 30 in the second ventilator 12 are not limited to three, and may be two or more. Although the second ventilator 12 according to the present embodiment is installed in the building B having the three rooms R1 to R3, in the ventilator 10 of the present disclosure, a plurality of air supply units 20 and a plurality of exhaust units 30 may be disposed in one space (the indoor space S1).

In the second ventilator 12, the outside air OA taken in from an outside air inlet 28 provided in the outer wall of the building B is distributed to each air supply unit 20 by an air supply duct 29. In the second ventilator 12, the air supply fan 22 individually supplies the supply air SA to each of the rooms R1 to R3, and the exhaust fan 32 releases the return air RA having a volume balanced with a volume of the supply air SA in each of the rooms R1 to R3 from each of the rooms R1 to R3 as the exhaust air EA. In the second ventilator 12, the total air volume of the supply air SA by the plurality of air supply units 20 and the total air volume of the exhaust air EA by the plurality of exhaust units 30 are balanced. In the ventilator of the present disclosure, a total number of the air supply units 20 (three in the present embodiment) is equal to a total number of the exhaust units 30 (three in the present embodiment), but the total number of the air supply units 20 and the total number of the exhaust units 30 may be different.

In the second ventilator 12, the air supply unit 20 (first heat exchanger 23) is disposed in each of the rooms R1 to R3, and the expansion valve 44 is accommodated in each of the air supply units 20. Therefore, in the second ventilator 12, the temperature of the supply air SA supplied from each air supply unit 20 to each of the rooms R1 to R3 can be individually adjusted by individually controlling the expansion valve 44 of each of the rooms R1 to R3.

In the second ventilator 12 having a such configuration, the air supply unit 20 and the exhaust unit 30 can be disposed for each of the rooms R1 to R3, or the air supply unit 20 can be disposed for each of the rooms R1 to R3 and fewer exhaust units 30 than the air supply units 20 can be disposed. Therefore, the degree of freedom in arrangement of the air supply unit 20 and the exhaust unit 30 can be further increased.

### (Third ventilator)

FIG. 10 is a schematic view showing a schematic arrangement of a ventilator according to the third embodiment of the present disclosure. FIG. 11 is a schematic configuration diagram of the ventilator according to the third embodiment of the present disclosure. The ventilator 10 of the present disclosure may include a plurality of air supply units 20 and one exhaust unit 30. Third ventilator 13 shown in FIG. 10 and FIG. 11 is different from the second ventilator 12 (see FIG. 8) in that the number of the exhaust units 30 is one.

As shown in FIG. 10, the third ventilator 13 is installed in the building B including three rooms R1 to R3 in the indoor space S1. The third ventilator 13 includes a return air duct 37 connected to the exhaust unit 30 and a plurality of suction ports 38 provided in the return air duct 37. In the third ventilator 13, one air supply unit 20 and one suction port 38 are disposed in each of the rooms R1 to R3. In the present embodiment, the number of the air supply units 20 and the number of the suction ports 38 disposed in each of the rooms R1 to R3 are the same. However, the supply air volume of the air supply unit 20 and the return air volume sucked from the suction port 38 are only required to be balanced in each of the rooms R1 to R3, and the number of the air supply units 20 and the number of the suction ports 38 are not required to be the same.

In the third ventilator 13, the plurality of air supply units 20 and one exhaust unit 30 are connected to the compressor 42. In the third ventilator 13, the outside air OA taken in from an outside air inlet 28 provided in the outer wall of the building B is distributed to each air supply unit 20 by an air supply duct 29. In the third ventilator 13, the air supply fan 22 individually supplies the supply air SA to each of the rooms R1 to R3, and the exhaust fan 32 releases the return air RA having a volume balanced with a volume of the supply air SA in each of the rooms R1 to R3 from the suction port 38 of each of the rooms R1 to R3 as the exhaust air EA. In the third ventilator 13, the total air volume of the supply air SA by the plurality of air supply units 20 and the air volume of the exhaust air EA by one exhaust unit 30 are balanced. The suction port 38 provided in each of the rooms R1 to R3 includes an air volume adjustment mechanism (not shown), which can individually adjust an intake amount of the suction port 38 (an air volume of the return air RA in each of the rooms R1 to R3). The air volume adjustment mechanism may be provided separately from the suction port 38, and the air volume adjustment mechanism in this case may be a damper, a fan unit having an air volume adjustment function, or the like. When the indoor space S1 provided with the plurality of air supply units 20 and the plurality of suction ports 38 is not divided into the plurality of rooms R1 to R3 (is one space), the air volume adjustment mechanism may be omitted.

In the third ventilator 13, the air supply unit 20 (first heat exchanger 23) is disposed in each of the rooms R1 to R3, and the expansion valve 44 is accommodated in each of the air supply units 20. Therefore, in the third ventilator 13, the temperature of the supply air SA supplied from each air supply unit 20 to each of the rooms R1 to R3 can be individually adjusted by individually controlling the expansion valve 44 of each of the rooms R1 to R3.

In the third ventilator 13 having such a configuration, an exhaust air volume corresponding to the supply air volume of the plurality of air supply units 20 is covered by one exhaust unit 30 to reduce the number of units constituting the third ventilator 13. Accordingly, the third ventilator 13 can be easily installed.

### (Overall configuration of air conditioning system)

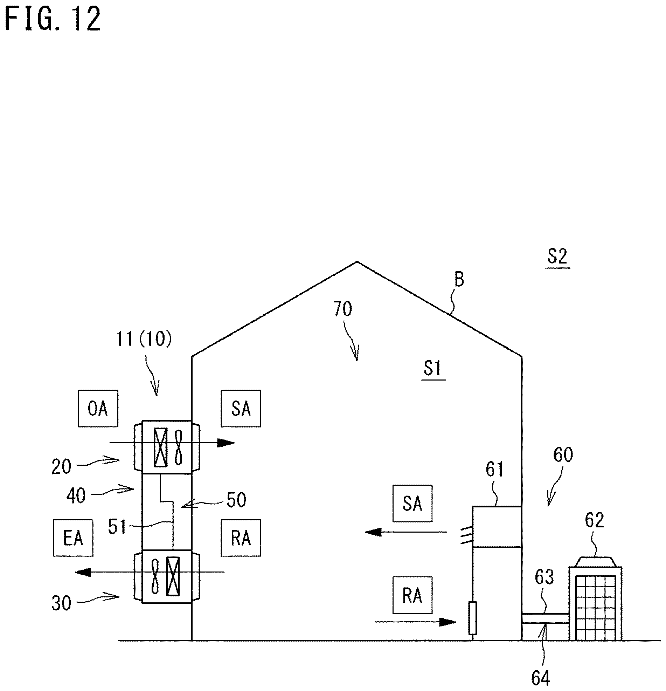

FIG. 12 is a schematic configuration diagram of an air conditioning system of the present disclosure. The air conditioning system 70 shown in FIG. 12 is installed in the building B such an office building or a factory to implement air conditioning of an air conditioning target space (the indoor space S1). The air conditioning system 70 includes the ventilator 10 and an air conditioner 60 including an indoor unit 61, an outdoor unit 62, and a refrigerant pipe 63. The air conditioner 60 performs vapor compression refrigeration cycle operation to cool or heat the air conditioning target space. In the embodiment shown in FIG. 12, the air conditioning system 70 including the first ventilator 11 as the ventilator 10 is exemplified, but the ventilator 10 included in the air conditioning system 70 may be the second ventilator 12 or the third ventilator 13. Although the air conditioning system 70 according to the present embodiment includes the air conditioner 60 that performs the vapor compression refrigeration cycle operation, the system of the air conditioner including the air conditioning system 70 is not limited thereto, and may be, for example, an air conditioner that implements air conditioning of a target space by cold water and hot water supplied from a heat source device.

The air conditioner 60 includes an air conditioning refrigerant circuit 64. The air conditioning refrigerant circuit 64 includes a compressor, a four-way switching valve, an outdoor heat exchanger, an outdoor expansion valve, an indoor heat exchanger, and the like (none of which are shown). The air conditioning refrigerant circuit 64 circulates the refrigerant between the indoor unit 61 and the outdoor unit 62. The air conditioning refrigerant circuit 64 is separated from the refrigerant circuit 50 of the ventilator 10 and constitutes an independent circuit.

In the air conditioning system 70 of the present disclosure, the air conditioner 60 includes the air conditioning refrigerant circuit 64 independent of the refrigerant circuit 50 of the ventilator 10. Therefore, in the air conditioning system 70, when the ventilator 10 and the air conditioner 60 are provided together, the ventilator 10 can be disposed regardless of the arrangement of the air conditioning refrigerant circuit 64, and the degree of freedom in arrangement of the ventilator 10 can be increased. In the air conditioning system 70 of the present disclosure, the refrigerant circuit 50 of the ventilator 10 and the air conditioning refrigerant circuit 64 of the air conditioner 60 are provided as separate circuits, and thus, the supply air temperatures (evaporation temperature at the evaporator) of the ventilator 10 and the air conditioner 60 can be changed. As a result, for example, when the cooling operation is performed, the supply air temperature suitable for the processing of an outside air load can be set in the ventilator 10, and the supply air temperature suitable for the processing of an air conditioning load of the indoor space S1 can be set in the air conditioner 60. In the air conditioning system 70, the supply air temperature of the ventilator 10 may be set to the same temperature as the supply air temperature of the air conditioner 60, and the air conditioning load of the indoor space S1 may be processed by the ventilator 10.

### (Fourth ventilator)

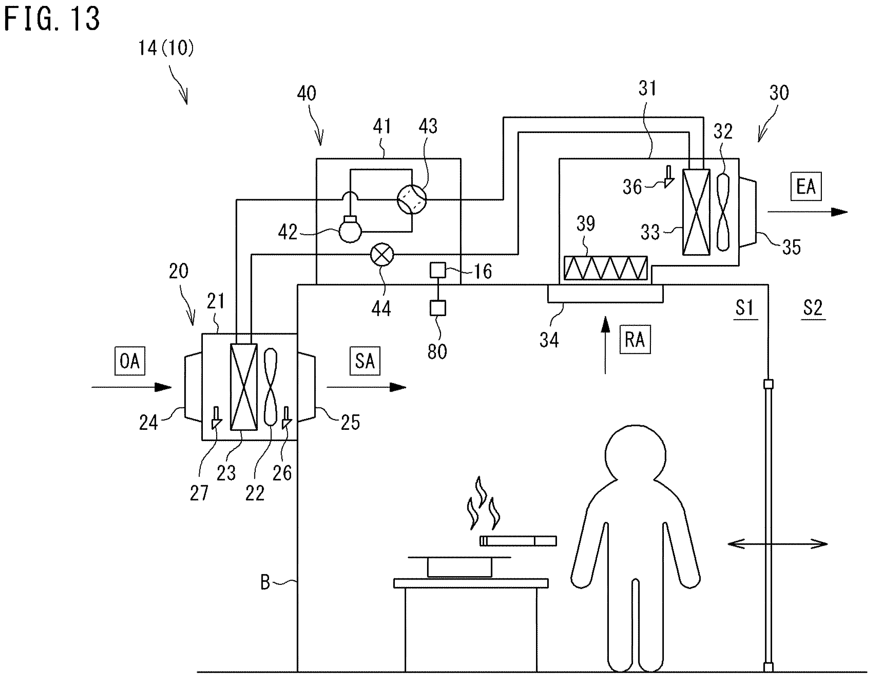

FIG. 13 is a schematic view showing a schematic arrangement of a ventilator according to the fourth embodiment of the present disclosure. The fourth ventilator 14 shown in FIG. 13 is the fourth embodiment of the ventilator 10 of the present disclosure, and is suitable for use in ventilation of a smoking corner. As shown in FIG. 13, the fourth ventilator 14 is installed in the building B where the indoor space S 1 is used as a smoking corner. The fourth ventilator 14 can be used independently (in other words, the air conditioner is not provided) for ventilation and temperature control of the indoor space S1 which is a non-air-conditioning area.

The fourth ventilator 14 includes one air supply unit 20, one exhaust unit 30, and one compressor unit 40. In the present embodiment, the number of the air supply units 20 and the number of the exhaust units 30 are the same, but the number of the air supply units 20 and the number of the exhaust units 30 is not required to be the same.

In the fourth ventilator 14, the outside air OA is supplied to the indoor space S1 by the air supply unit 20 provided on the outer wall of the building B, and the air in the indoor space S1 is released to the outdoor space S2 as the exhaust air EA by the exhaust unit 30 provided in the outdoor space S2 (attic). In the fourth ventilator 14, it is preferable to adjust the air volume balance between the air supply unit 20 and the exhaust unit 30 such that the exhaust air volume is slightly larger than the supply air volume. As a result, the indoor space S1 has a negative pressure as compared with the outdoor space S2, and it is possible to suppress tobacco odor, smoke, and the like from flowing from the indoor space S1 to the outdoor space S2. Note that the fourth ventilator 14 is preferably used in combination with a sensor 80 that detects the number of people in the building B (indoor space S1). In this case, the control unit 16 (see FIG. 4) of the fourth ventilator 14 preferably calculates target values of the exhaust air volume and the supply air volume in accordance with the number of people in the building B detected by the sensor 80, and controls the number of rotations of the exhaust fan 32 and the air supply fan 22 so as to obtain the target values. Note that the fourth ventilator 14 may use, as the sensor 80, not a sensor that detects the number of people but a sensor (for example, a dust concentration sensor, a CO2 sensor, an odor sensor, or the like) that detects a state of the air in the indoor space S1. In this case, the control unit 16 calculates the target values of the exhaust air volume and the supply air volume in accordance with the state of air (for example, dust concentration, CO2 concentration, odor index, and the like) of the indoor space S1 detected by the sensor 8.

The fourth ventilator 14 includes a filter 39 in the second casing 31 of the exhaust unit 30. The fourth ventilator 14 is different from the ventilators 11 to 13 according to the other embodiments in that the fourth ventilator 14 includes the filter 39. The filter 39 is a filter capable of collecting dust and chemical substances contained in cigarette smoke. In the fourth ventilator 14, the amount of dust and chemical substances released to the outdoor space S2 together with the exhaust air EA can be reduced by the filter 39. As the filter 39, an electric dust collection filter, a chemical filter, or the like can be adopted. In the present embodiment, the filter 39 is provided in the second casing 31, but the filter 39 may be provided separately from the second casing 31 (as a separate filter unit).

When such a fourth ventilator 14 is installed in the building B such as a prefabricated hut, for example, a smoking corner subjected to ventilation and temperature control in the indoor space S1 can be easily provided. For example, when the exhaust air volume and the supply air volume are 2000 CMH, by using the fourth ventilator 14 having a cooling performance of about 6 kw and a heating performance of about 10 kw, a smoking corner having a size of about 30 square meters (a ceiling height of about 2.5 m) can be easily provided. In the fourth ventilator 14, each performance of the air supply fan 22 and the exhaust fan 32, the first heat exchanger 23 and the second heat exchanger 33, and the compressor 42 is set in accordance with the size of the indoor space S1 and the number of people that can be accommodated in the indoor space S1.

### [Functional effects of embodiment]

(1) The ventilator 10 described in the above embodiment includes the refrigerant circuit 50 through which the refrigerant flows, the refrigerant circuit 50 including the compressor 42, the first heat exchanger 23, and the second heat exchanger 33 that are connected by the refrigerant pipe 51, the air supply fan 22 that supplies air in the outdoor space S2 to the indoor space through the first heat exchanger 23, the first casing 21 that accommodates the first heat exchanger 23 and the air supply fan 22, the exhaust fan 32 that exhausts air in the indoor space S1 to the outdoor space S2 through the second heat exchanger 33, and the second casing 31 that accommodates the second heat exchanger 33 and the exhaust fan 32. In the ventilator 10, the first casing 21 and the second casing 31 are separable.
   In the ventilator 10 having such a configuration, by performing heat recovery between the supply air SA and the exhaust air EA using the refrigerant as a medium, the set of the first heat exchanger 23 and the air supply fan 22, the set of the second heat exchanger 33 and the exhaust fan 32, and the compressor 42 can be disposed at separate positions. As a result, it is possible to increase a degree of freedom in arrangement of the ventilator 10 capable of recovering heat as compared with the related art.
(2) The ventilator 10 described in the above embodiment further includes the third casing 41 that accommodates the compressor 42.
   In the ventilator 10 having such a configuration, by unitizing the set of the first heat exchanger 23 and the air supply fan 22, the set of the second heat exchanger 33 and the exhaust fan 32, and the compressor 42, the degree of freedom in arrangement of the ventilator 10 capable of recovering heat can be further increased.
(3) In the ventilator 10 described in the above embodiment, the third casing 41 is separable from the first casing 21 and the second casing 31.
   In the ventilator 10 having such a configuration, by configuring each of the air supply unit 20, the exhaust unit 30, and the compressor unit 40 to be separable, the degree of freedom in arrangement of the ventilator 10 capable of recovering heat can be further increased.
(4) In the ventilator 10 described in the above embodiment, the first heat exchanger 23, the air supply fan 22, and the first casing 21 constitute the air supply unit 20, the second heat exchanger 33, the exhaust fan 32, and the second casing 31 constitute the exhaust unit 30, and the plurality of air supply units 20 or the plurality of exhaust units 30 is connected to the compressor 42.
   In the ventilator 10 having a such configuration, the air supply unit 20 and the exhaust unit 30 can be disposed for each room, or the air supply unit 20 can be disposed for each of a plurality of rooms and fewer exhaust units 30 than the air supply units 20 can be disposed. Therefore, the degree of freedom in arrangement of the air supply unit 20 and the exhaust unit 30 can be further increased.
(5) In the ventilator 10 described in the above embodiment, when the plurality of air supply units 20 is connected to the compressor 42, the air supply units 20 preferably include the control valve 44 for adjusting a pressure of the refrigerant to be supplied to the first heat exchanger 23.
   In the ventilator 10 described in the above embodiment, when the plurality of air supply units 20 is provided, it is possible to individually adjust the temperature of the supply air SA supplied from the air supply units 20 to the indoor space S1.
(6) In the ventilator 10 described in the above embodiment, the compressor 42 is accommodated in one of the first casing 21 or the second casing 31.
   In this case, by unitizing the set of the first heat exchanger 23 and the air supply fan 22 and the set of the second heat exchanger 33 and the exhaust fan 32, and accommodating the compressor 42 in any one of the units, the degree of freedom in arrangement of the ventilator 10 capable of recovering heat can be further increased.
(7) The fourth ventilator 14 described in the above embodiment further includes the filter (39) that allows collection of dust and a chemical substance contained in cigarette smoke and allows passage of the air exhausted from the indoor space S1 to the outdoor space S2 through the second heat exchanger 33.
   Such a ventilator can perform ventilation and temperature control in the building independently without an air conditioner, and facilitates installation of a smoking corner subjected to ventilation and temperature control in the building B.
(8) The air conditioning system 70 described in the above embodiment includes the ventilator 10, and the air conditioner 60 that air-conditions the indoor space S1, in which the air conditioner 60 includes the air conditioning refrigerant circuit 64 separate from the refrigerant circuit 50.

In the air conditioning system 70 having such a configuration, when the ventilator 10 and the air conditioner 60 are provided together, the degree of freedom in arrangement of the ventilator 10 can be increased by separating the refrigerant circuit 50 and the air conditioning refrigerant circuit 64.

The present disclosure should not be limited to the above exemplification, but is intended to include any modification recited in the claims within meanings and a scope equivalent to those of the claims.

### REFERENCE SIGNS LIST

- 10: ventilator
- 11: first ventilator
- 12: second ventilator
- 13: third ventilator
- 14: fourth ventilator
- 20: air supply unit
- 21: first casing
- 22: air supply fan
- 23: first heat exchanger
- 30: exhaust unit
- 31: second casing
- 32: exhaust fan
- 33: second heat exchanger
- 39: filter
- 41: third casing
- 42: compressor
- 44: expansion valve (control valve)
- 50: refrigerant circuit
- 51: refrigerant pipe
- 64: air conditioning refrigerant circuit
- 70: air conditioning system
- S1: indoor space
- S2: outdoor space

## Claims

1. A ventilator (10) comprising:
a refrigerant circuit (50) through which a refrigerant flows, the refrigerant circuit (50) including a compressor (42), a first heat exchanger (23), and a second heat exchanger (33) that are connected by a refrigerant pipe (51);
an air supply fan (22) that supplies air in an outdoor space (S2) to an indoor space (S1) through the first heat exchanger (23);
a first casing (21) that accommodates the first heat exchanger (23) and the air supply fan (22);
an exhaust fan (32) that exhausts air in the indoor space (S1) to the outdoor space (S2) through the second heat exchanger (33); and
a second casing (31) that accommodates the second heat exchanger (33) and the exhaust fan (32),
wherein the first casing (21) and the second casing (31) are separable.

2. The ventilator (10) according to claim 1, further comprising a third casing (41) that accommodates the compressor (42).

3. The ventilator (10) according to claim 2, wherein the third casing (41) is separable from the first casing (21) and the second casing (31).

4. The ventilator (12, 13) according to any one of claims 1 to 3, wherein
the first heat exchanger (23), the air supply fan (22), and the first casing (21) constitute an air supply unit (20),
the second heat exchanger (33), the exhaust fan (32), and the second casing (31) constitute an exhaust unit (30), and
a plurality of the air supply units (20) or a plurality of the exhaust units (30) is connected to the compressor (42).

5. The ventilator (12, 13) according to claim 4, wherein when the plurality of air supply units (20) is connected to the compressor (42), the air supply units (20) include a control valve (44) for adjusting a pressure of the refrigerant to be supplied to the first heat exchanger (23).

6. The ventilator (10) according to claim 1, wherein the compressor (42) is accommodated in one of the first casing (21) or the second casing (31).

7. The ventilator (14) according to any one of claims 1 to 6, further comprising a filter (39) that allows collection of dust and a chemical substance contained in cigarette smoke and allows passage of the air exhausted from the indoor space (S1) to the outdoor space (S2) through the second heat exchanger (33).

8. An air conditioning system (70) comprising:
the ventilator (10) according to any one of claims 1 to 6; and
an air conditioner (60) that air-conditions the indoor space (S 1),
wherein the air conditioner (60) includes an air conditioning refrigerant circuit (64) separate from the refrigerant circuit (50).
